# EUROPEAN PATENT SPECIFICATION

(11) **EP 1 314 361 B1**
(45) Date of publication and mention of the grant of the patent: **08.08.2007**
(21) Application number: 02020208.1
(22) Date of filing: 10.09.2002
(51) Int. Cl.: A23L 1/29, A23L 1/30, A23L 1/305, A23L 2/52, A23C 21/00

(54) **"Shelf stable nutritional composition containing intact whey protein, process of manufacture and use"**
Lagerstabiles Nahrungsmittelprodukt enthaltend Molkenprotein, Verfahren zu seiner Herstellung und Verwendung
Produit alimentaire nutritionnel de longue conservation contenant du petit-lait, procede de preparation et utilisation

(30) Priority: 26.11.2001 EP 01128025
(43) Date of publication of application: 28.05.2003
(73) Proprietor: NESTEC S.A., 1800 Vevey (CH)
(72) Inventor: Jost, Rolf, 3065 Bolligen (CH)
(74) Representative: Dixon, Sarah

(56) References cited:
- EP-A- 0 486 425
- WO-A-01/22837
- WO-A-99/56563
- US-A- 4 112 123
- US-B1- 6 194 009

## Description

### Technical field of the invention

This invention relates to a nutritional composition that contains high levels of intact, i.e. non hydrolysed whey protein as protein source.

### Background of the invention

Liquid formulas, in particular for enteral nutrition contain protein in a concentration ranging form 2-6 %, most of the products having 3-4 % (30-40g/l) of protein, more rarely protein concentrations of >50g/l to 80g/l are also produced. If the existing products are reviewed with respect to their protein source, it appears that most formulas are based on casein (Ca-, Na- or K-caseinate), more recently also on milk protein concentrate (MPC).

At present, liquid shelf stable formulas based on intact whey protein are practically non-existing. This is related to the pronounced heat lability of whey protein in sterilising heat treatments, a problem not seen in the case of casein as a protein source.

In consideration of the high nutritional protein quality (balanced aminogramme) of whey protein, the use of this protein source in enteral nutrition formulas appears very desirable.

Due to heat induced gelling or sedimentation, it is however so far not possible to incorporate markedly higher concentrations of whey protein than e.g. present in commercial milk protein concentrates (in milk protein concentrates whey proteins constitutes ca 20 % of the total protein). Sterilising heat treatments such as required for bacteriological safety and non-refrigerated shelf life lead to denaturation of the protein, followed by aggregation, sediment formation or gelling of the protein in the formula.

A known solution to this stability problem is the partial hydrolysis of whey protein by proteases, prior to its introduction in a composition undergoing sterilising heat treatments.

An example of a commercial enteral formula containing 40g/l of partially hydrolysed whey protein is *Peptamen (R)*. In this product the protein has been partially hydrolysed by trypsin and thereby rendered stable to sterilising heat treatment. It is also possible to combine whey protein hydrolysate with casein hydrolysate or caseinate to compose the protein basis of a formula. An example of such an approach is in US 5'821'217 (enteral formula containing protein hydrolysates) or in US 5'549'905 (a pediatric patients formula containing 12 % of the calories in form of hydrolysed whey protein).

Although the use of partially hydrolysed (whey) protein is a valid approach, an inherent disadvantage of this solution is the bitter taste resulting from the incorporation of partially hydrolysed protein into such formulas. While bitter taste seems not a big problem in a tube feeding modus, it becomes a serious problem in a formula intended for oral consumption.

In order to produce bland tasting whey protein based enteral formulas with long non-refrigerated shelf life, approaches other than hydrolysis must be found to stabilise the protein.

Such an approach is the object of the present invention.

Two recent developments seem to go in the same direction, while they do not achieve the goal of sterility and long shelf life which exploit the known acid stability of whey protein:

US 4, 112, 123 discloses a drid or reconstituted nutritional composition comprising whey protein. WO 01/22837 discloses an infant formula comprising whey protein.

EP 0 486 425 teaches the production of a whey protein based formula (at least 60% whey protein) which as a pH between 3.5 and 3.9. The low pH of the formula was obtained by the addition of citric and phosphoric acid. The formula received a pasteurising heat treatment: at 95.60° C for 4.3 s.

In WO 99/56563, a low pH enteral formula is described in which highly methoxylated pectin (0.6-1.25 %) is used as a protein stabiliser. One particular variant of this formula contains intact whey protein as a protein source; the final pH of the formula is 4.0-4.35 and the heat treatment applied to the formula is 102-104° C for 18 s.

Both these documents are first steps towards a successful incorporation of intact whey protein into liquid enteral nutrition formulas. However they both have the decisive shortcoming of being unable to deliver shelf-stable products. This is evident if one looks at the heat treatments being used. Both heat treatments provide sufficient killing of vegetative non-spore forming bacteria but cannot inactivate spore formers to any sufficient extent. In order to inactivate e.g. spores of *B.cereus*, heat treatments well above 105° C are required. *B.cereus* has a D-value at 105° C in the range of 40-100 s at acid pH. The heat treatment given e.g. in WO 99/56563 (102-104° C/18 s) will provide less than one log of inactivation. With a treatment at 130° C, and D₁₃₀ = 0.1 s, close to 10 logs of inactivation per second of holding time are achieved for the same organism. For thermophilic spore formers such as *B. stearothermophilus, B. coagulans* or *B. circulans*, D₁₀₅-values are >100 s at acid pH. It is therefore clear that heat treatments such as used in both documents cannot lead to commercial sterility neither to a any satisfactory non-refrigerated shelf life.

A further disadvantage of the processes described in the two documents is doubtless the strongly sour taste of the products, which also limits the flavouring possibilities and by this also narrows acceptance by the consumer.

A third shortcoming of the approach described in the two documents is the fact that with a pH of the formula in a range 3.0 - 4.6, no casein can be included in the formula, as under these conditions, casein is precipitated or forms a gel. This excludes the production of liquid formulas with combinations of whey protein and casein.

According to the teachings of the prior art so far, the prior state of the art cannot solve the problem of producing a commercially sterile, shelf-stable liquid formula, with a neutral pH and based exclusively or to its major part, on intact (unhydrolysed) whey protein.

The objective of the present invention, is to make possible to sterilise whey protein solutions at high protein concentration (up to 10%) and in presence of high concentrations of carbohydrates, sucrose and/or malto-dextrins.

### Summary of the invention

Thus the invention provides a shelf stable liquid nutritional composition with a protein content ranging from 30 - 90 g/l which has a pH ranging at ambient temperature between 6.0 and 8.0 and in which all or a major part of the protein is composed of whey protein in intact, unhydrolysed form.

The invention further provides a process for the production of an intact whey protein formula characterised by the following steps:
adjusting an acid phase composed of whey protein and carbohydrates to a pH of 2.5-3.5 and subsequently UHT-sterilising it,
neutralising the sterilised acid phase with a soluble base, the pH being raised aseptically to a value of 6.50 or higher at a temperature of 5-15° C,
separately UHT-sterilising a fat phase in form of a stable O/W emulsion with a pH between 6.50 and 7.50, which pH is mesured at ambient temperature and in which the said phase contains also all soluble and insoluble minerals of the formula and the trace elements and vitamins and
aseptically combining the two separately sterilised phases and aseptically filling the mixture into a suitable package, wherein filling takes place in an aseptic environment.

Sterilisation is performed by either direct or indirect UHT-heating, preferably in the temperature range of 135 -150° C.

The above composition may be used in oral nutrition or in enteral nutrition.

### Detailed description of the invention

A first key condition to achieve this without causing any protein aggregation is to adjust the pH of the protein/carbohydrate solution to 2.5 - 3.5 with an acid, preferably a mineral acid, prior to heat treatment.

Second key element is an aseptic neutralisation with sterile soluble base to rise the pH of the heat sterilised protein/carbohydrate solution to a value between 6.50 to 7.50 (for ambient temperature). A soluble base has to be used for this purpose, such as preferably KOH, NaOH or mixtures of the two.

Third key element is the introduction in adequate proportion, of a separately sterilised fat phase in form of a stable oil in water emulsion with a (near) neutral pH into the sterile tank.

The calcium needed in the formula is introduced either in form of insoluble calcium salts, which are preferably selected from the group consisting of tri-calcium phosphate, calcium citrate and calcium carbonate or in the form of a dispersible protein complex such as calcium caseinate or milk protein concentrate into the neutral phase prior to its sterilisation.

Soluble minerals and trace elements are introduced aseptically into the sterile acid phase after after its neutralization in the sterile tank or, alternatively in the combined phases after the addition of the UHT-sterilized fat phase.

According to the invention, the combined phases mixed in a sterile tank are then aseptically filled into Tetras or tins or another suitable package with an appropriate aseptic filling machine.

The filled, sterile product has a pH ranging from about 6.5 to 7.5, measured at ambient temperature. It is a stable product without any defects due to protein coagulation, sedimentation or gelling. It has good flow properties, shows no mineral sedimentation and has clean, bland taste. Due to its taste blandness and a neutral pH almost any flavour variant can be applied by the corresponding aroma addition. The non-refrigerated shelf life of the product is several months, up to 6 months after production and even longer.

The following Examples illustrate the preferred embodiments of the invention for the purpose of illustrating the practice thereof and do not, in any way, limit the scope of the invention. In these Examples, the parts and percentages are by weight unless stated otherwise.

### Example 1: High protein formula (80g/l) based on whey protein

26 kg of whey protein isolate (88 % protein on total solids) together with 15 kg of sucrose and 15 kg of malto-dextrin (Dextrose Equivalent, DE =10-14) are dissolved in 150 kg of demineralised water. After complete dissolution, the pH of the solution is adjusted with H₃PO₄ (20 %) to 3.0; the total weight of the protein/carbohydrate solution is adjusted to 250 kg by addition of water. The whey protein content of the acid phase is 9.2 %, its total solids content 22.4 %.

This solution is then UHT-heated on an indirect UHT plant. Preheating temperature is 80° C and sterilisation temperature 148° C, holding time is 5 s. After cooling of the product to 10° C, 217.5 kg of the product are pumped into a 500 kg double-walled sterile tank, fitted with an electrode and an aseptic dosing unit for base addition. A mixture of 20 %KOH /NaOH is pumped through a 0.1 micron sterile filter and the pH rapidly raised from ca 3.0 to 6.80. At this point, base dosing is stopped and the sterile product kept refrigerated in the sterile tank.

To produce 50 kg of an oil in water (O/W) emulsion with a fat content of 23 %, 11.5 kg of sunflower oil are emulsified with 30 kg of a 2 % solution of Na-caseinate, the pH of which was previously adjusted to 7.3 at ambient temperature.

The mixture is homogenised at 60° C in a two stage homogeniser at 250 bar in the first stage and then at 50 bar in the second stage. Following homogenisation micronised calcium carbonate is dosed according to formula requirements. Trace elements and vitamins (not detailed) are introduced next, as well as a liquid aroma concentrate with strong stirring into the fat emulsion.

The completed fat phase is then UHT-sterilised: preheating 80° C, high heating 148° C, holding 5 s. The sterilised emulsion is cooled to 10° C on a plate heat exchanger and 32.5 kg of it pumped into the sterile tank. The total weight of the combined phases is now 250 kg, the pH measured at 12° C is 6.90.

A concentrated solution of soluble minerals (according to formula requirements) is then aseptically introduced into the sterile tank.

After stirring for ca 15 min, the formula is pumped into an aseptic filling machine and filled into sterile aluminium tins, the latter are hermetically sealed in a sterile environment.

The resulting liquid product has the following composition: protein: 82 g/kg; carbohydrates: 104 g/kg; fat: 30 g/kg. The energy density is 1 kcal/g. Casein makes up 2 % of the total protein, 98 % of the protein being whey protein. The product is stable for at least 6 months at ambient temperature and shows no sedimentation nor coagulation nor gelling. It has a clean taste and good flow properties.

### Example 2: whey protein based tube-feeding formula at 1 kcal/g

14.28 kg of whey protein concentrate (80 % protein on total solids) are completely dissolved in 125 kg demineralised water. 30 kg malto-dextrin and 7.14 kg of sucrose are then dissolved in the protein solution. Following the dissolution of the carbohydrates, the total weight of the solution is adjusted to 199 kg by adding demineralised water. The pH is then lowered to 3.0 with H₃PO₄ (20 % concentration). The acid phase (200 kg) is pumped through the UHT-Iine: preheating at 80° C, high heating at 145° C for 10 s.

The product is cooled on the plate exchanger to 10° C and 140 kg of it are pumped into a sterile tank equipped with an aseptic dosing unit for base addition and a pH electrode. The pH of this protein/carbohydrate solution is raised to 6.80 by dosing a mixture of NaOH/KOH (20 %) under rapid stirring.

100 kg of an O/W emulsion with 12.2 % fat are next produced. In a fat mix composed of 8.54 kg medium chain triglycerides (C₆₋₁₀, MCT) and 3.66 kg sunflower oil, 0.5 kg of soy lecithin are dissolved at a temperature of 70° C. The oil mix is homogenised at 70° C with 50 kg of a solution of Na-caseinate (1 %). The pressure of the homogeniser valve is set to 250 bar (first stage) and 50 bar (second stage) and the neutral phase is homogenised at 70° C.

633.83 g (1.111 moles) of Tri-calcium citrate . 4 H₂O and 333.6 g (3.333 moles) of calcium carbonate, both salts micronised, are dispersed in an aqeous system and stabilised in a known manner. The dispersion is then added to the O/W emulsion and the whole mixture agitated at ca 60° C. Trace elements and vitamins (as required by formula targets) are added to the stirred emulsion as well as a strawberry flavor concentrate. Following adjustment of the total weight to 100 kg, the pH of the emulsion is raised with KOH to 6.80. After the pH adjustment, the O/W emulsion is heated in an UHT-plant: preheating at 80° C, high heating 145° C, holding time 10 s, followed by rapid cooling to 10° C.

60 kg of the sterilised emulsion are then pumped into the sterile tank, which contains already the neutralised protein phase.

A concentrated solution of soluble minerals (accordiing to formula requirements) is introduced through the sterile filter into the aseptic tank.

After another 15 min of stirring, the complete formula is pumped into a Tetra Pak aseptic filling machine and filled into Tetra briks.

The packed product represents the following composition: total protein: 40 g/kg; fat: 36.6 g/kg; total carbohydrate: 130 g/kg; total energy: 1 kcal/g. Calcium content is 800 mg/kg. The formula shows clean strawberry taste, has excellent flow properties and shows no sedimentation or fat separation. It is stable for >6 months at ambient temperature.

### Example 3: whey protein predominant enteral formula with ca 40 % protein from casein and ca 60 % whey protein; energy density 1.5 kcal/g

For 200 kg of acid phase, 11.6 kg of whey protein isolate (88 % protein on total solids) are dissolved in 120 kg demineralised water. After complete dissolution of the protein, 18 kg of maltodextrin (DE 10-14) and 32 kg of sucrose are dissolved in the protein solution. After complete dissolution of the carbohydrates, the total weight is adjusted to 199 kg with demineralised water. H₃PO₄ (20 %) is added to adjust the pH to 3.0 at ambient temperature. The acid phase (200 kg), is heat sterilised by steam injection at 148° C for 4 s and cooled to 12° C; 120 kg of it are pumped into the sterile tank.

Soluble base (KOH/NaOH) is aseptically dosed via sterile filter, to raise the pH to 6.8 (measurement at 12° C).

The fat phase of the product is produced as follows. A dispersion of 9.036 kg of milk protein concentrate (83 % protein on total solids) and 75 g of tri-K-citrate in 70 kg of demineralised water of 60° C is made. A fat mix composed of 18.125 kg of a fat mix sunflower oil/corn oil/canola oil in a weight ratio 60/20/20 is made and, after warming the mix to 70° C, 0.3 kg of mono-diglycerides are dissolved in the fat. The fat mix is emulsified together with the protein dispersion using a colloidal mill. The total weight of the mix is adjusted to 100 kg by adding demineralised water and the resulting coarse emulsion is homogenised at 200 bar/40 bar at ca 65° C. The resulting emulsion is now sterilised by direct steam injection at 148° C for 5 s, flash-cooled to 70° C and then aseptically homogenised at 150/30 bar pressure. The emulsion is cooled to ca 10° C and 80 kg of it are pumped into the sterile tank where mixing with the 120 kg of protein/carbohydrate phase creates 200 kg of completed formula.

Soluble minerals and trace elements as well as vitamins (according to formula requirements) areaseptically introduced into the mix via the sterile filter.

After another 15 min of stirring in the tank, the sterile formula is filled aseptically into Tetra briks.

The filled product has the following characteristics: total protein 60 g/kg, of which ca 40 % is casein and 60 % are whey proteins, mainly from whey protein isolate and to a lower part from the milk protein concentrate. The fat content is 73 g/kg and the total carbohydrate content 150 g/kg. This provides an energy density of ca 1.5 kcal/g. Calcium content of the formula is 940 mg/kg, practically all the calcium is derived from milk protein concentrate. The formula has a bland taste and shows neither sediment nor any fat separation. Its pH at ambient temperature is 7.0. The product remains completely stable for up to 6 months at ambient temperature.

## Claims

1. A shelf stable liquid nutritional composition with a protein content ranging from 30 - 90 g/l which has a pH ranging at ambient temperature between 6,0 and 8,0 and in which all or a major part of the protein is composed of whey protein in intact, unhydrolysed form.

2. A shelf stable liquid nutritional composition according to claim 1 which has a pH ranging at ambient temperature between 6.50 to 7.0.

3. A shelf stable liquid nutritional composition according to claim 1 which contains calcium in a concentration between 300 - 1200 mg/l.

4. A shelf stable liquid nutritional composition according to claim 1 which contains carbohydrates of different kind and in various proportions, which contains emulsified dietetic oils in various desirable proportions and which has an energy density of between 1.0 - 2.0 kcal/ml.

5. A process for the production of an intact whey protein formula **characterised by** the following steps:
adjusting an acid phase composed of whey protein and carbohydrates to a pH of 2.5-3.5 and subsequently UHT-sterilising it,
neutralising the sterilised acid phase with a soluble base, the pH being raised aseptically to a value of 6.50 or higher at a temperature of 5-15° C,
separately UHT-sterilising a fat phase in form of a stable O/W emulsion with a pH between 6.50 and 7.50, which pH is mesured at ambient temperature and in which the said phase contains also all soluble and insoluble minerals of the formula and the trace elements and vitamins and
aseptically combining the two separately sterilised phases in a sterile tank and aseptically filling the mixture into a suitable package, wherein filling takes place in an aseptic environment.

6. A process according to claim 6, in which the two separately sterilised neutralised aqueous phase and fat phase in the form of a stable O/W emulsion are aseptically mixed in-line and aseptically filled into a suitable package, wherein filling takes place in an aseptic environment.

## Patentansprüche

1. Eine bei Raumtemperatur lagerfähige flüssige Ernährungszusammensetzung mit einem Proteingehalt im Bereich von 30 bis 90 g/l, die einen pH aufweist, der bei Raumtemperatur zwischen 6,0 und 8,0 liegt, und in der sich das gesamte Protein oder ein überwiegender Teil des Proteins aus Molkenprotein in intakter, nicht-hydrolysierter Form zusammensetzt.

2. Bei Raumtemperatur lagerfähige flüssige Ernährungszusammensetzung nach Anspruch 1, die einen pH aufweist, der bei Umgebungstemperatur in einem Bereich zwischen 6,50 bis 7,0 liegt.

3. Bei Raumtemperatur lagerfähige flüssige Ernährungszusammensetzung nach Anspruch 1, die Calcium in einer Konzentration zwischen 300 bis 1200 mg/l enthält.

4. Bei Raumtemperatur lagerfähige flüssige Ernährungszusammensetzung nach Anspruch 1, die Kohlenhydrate unterschiedlicher Art und in unterschiedlichen Proportionen enthält, die emulgierte diätetische Öle in unterschiedlichen wünschenswerten Anteilen enthält und die eine Energiedichte von zwischen 1,0 bis 2,0 kcal/ml aufweist.

5. Verfahren zur Herstellung einer Formulanahrung mit intaktem Molkenprotein, **gekennzeichnet durch** die folgenden Stufen:
Einstellen des pH einer sauren Phase, die aus Molkenprotein und Kohlenhydraten zusammengesetzt ist, auf einen Wert von 2,5 bis 3,5, und deren anschließendes UHT-Sterilisieren,
Neutralisieren der stabilisierten sauren Phase mit einer löslichen Base, wobei der pH aseptisch auf einen Wert von 6,50 oder höher bei einer Temperatur von 5 bis 15 °C erhöht wird,
getrennt davon UHT-Sterilisieren einer Fettphase in Form einer stabilen O/W-Emulsion mit einem pH zwischen 6,50 und 7,50, wobei dieser pH bei Umgebungstemperatur gemessen wird und wobei die genannte Phase außerdem alle löslichen und unlöslichen Mineralstoffe der Formulanahrung und die Spurenelemente und Vitamine enthält, und
aseptisches Kombinieren der beiden getrennt voneinander sterilisierten Phasen in einem sterilen Tank und aseptisches Abfüllen der Mischung in eine geeignete Verpackung, wobei das Abfüllen in einer aseptischen Umgebung erfolgt.

6. Bei Raumtemperatur lagerfähige flüssige Ernährungszusammensetzung nach Anspruch 6, wobei die beiden getrennt voneinander sterilisierten neutralisierte wässrige Phase und Fettphase in der Form einer stabilen O/W-Emulsion aseptisch in-line vermischt werden und aseptisch in eine geeignete Verpackung abgefüllt werden, wobei das Abfüllen in einer aseptischen Umgebung erfolgt.

## Revendications

1. Composition liquide nutritive longue conservation présentant une teneur en protéines s'inscrivant dans la plage allant de 30 à 90 g/l, présentant, à température ambiante, un pH s'inscrivant dans la plage allant de 6,0 à 8,0 et dans laquelle la protéine entière ou une grande partie de celle-ci se compose de protéine lactosérique, sous sa forme intacte, non hydrolysée.

2. Composition liquide nutritive longue conservation selon la revendication 1, présentant, à température ambiante, un pH s'inscrivant dans la plage allant de 6,50 à 7,0.

3. Composition liquide nutritive longue conservation selon la revendication 1, contenant du calcium en une concentration s'inscrivant dans la plage allant de 300 à 1200 mg/l.

4. Composition liquide nutritive longue conservation selon la revendication 1, contenant des glucides de différents types et en diverses proportions, contenant des huiles diététiques émulsifiées en différentes proportions souhaitables et présentant une densité énergétique s'inscrivant dans la plage allant de 1,0 à 2,0 kcal/ml.

5. Procédé de production d'une formule de protéine lactosérique intacte **caractérisé par** les étapes consistant à :
ajuster une phase acide composée d'une protéine lactosérique et de glucides à un pH s'inscrivant dans une plage allant de 2,5 à 3,5 et à procéder ensuite à sa stérilisation UHT,
neutraliser la phase acide stérilisée à l'aide d'une base soluble, le pH étant élevé à une valeur de 6,50 ou plus de façon aseptique, à une température s'inscrivant dans une plage allant de 5 à 15°C,
procéder séparément à une stérilisation UHT d'une phase grasse sous forme d'émulsion de type huile dans l'eau stable ayant un pH s'inscrivant dans la plage allant de 6,50 à 7,50, le pH étant mesuré à température ambiante et ladite phase contenant également tous les minéraux solubles et insolubles de la formule et les oligoéléments et des vitamines et
à combiner de façon aseptique les deux phases stérilisées séparément dans une cuve stérile et à introduire de façon aseptique le mélange dans un conditionnement adéquat, le remplissage étant réalisé dans un environnement aseptique.

6. Procédé selon la revendication 6, dans lequel la phase aqueuse et la phase grasse sous forme d'émulsion de type huile dans l'eau stable, toutes deux stérilisées et neutralisées séparément, sont mélangées en ligne de façon aseptique et introduites de façon aseptique dans un conditionnement adéquat, le remplissage étant réalisé dans un environnement aseptique.
